(19) Europäisches Patentamt / European Patent Office / Office européen des brevets

(11) **EP 2 362 238 B1**

(12) **EUROPEAN PATENT SPECIFICATION**

(45) Date of publication and mention
of the grant of the patent:
**04.06.2014 Bulletin 2014/23**

(51) Int Cl.:
***G01S 11/14*** (2006.01)

(21) Application number: **10154796.6**

(22) Date of filing: **26.02.2010**

(54) **Estimating the distance from a sensor to a sound source**

Einschätzung des Abstands von einem Sensor zu einer Tonquelle

Estimation de la distance d'un capteur à la source de sons

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**31.08.2011 Bulletin 2011/35**

(73) Proprietor: **Honda Research Institute Europe GmbH**
**63073 Offenbach/Main (DE)**

(72) Inventor: **Rodemann, Tobias Dr.**
**63067 Offenbach (DE)**

(74) Representative: **Rupp, Christian**
**Mitscherlich PartmbB**
**Patent- und Rechtsanwälte**
**Sonnenstraße 33**
**80331 München (DE)**

(56) References cited:
**US-A1- 2004 141 418     US-A1- 2008 170 717**
**US-A1- 2009 097 360**

- **MUHAMMAD USMAN ET AL: "Real time humanoid sound source localization and tracking in a highly reverberant environment" SIGNAL PROCESSING, 2008. ICSP 2008. 9TH INTERNATIONAL CONFERENCE ON, IEEE, PISCATAWAY, NJ, USA, 26 October 2008 (2008-10-26), pages 2661-2664, XP031369617 ISBN: 978-1-4244-2178-7**
- **BERGLUND E ET AL: "Sound source localisation through active audition" INTELLIGENT ROBOTS AND SYSTEMS, 2005. (IROS 2005). 2005 IEEE/RSJ INTER NATIONAL CONFERENCE ON EDMONTON, AB, CANADA 02-06 AUG. 2005, PISCATAWAY, NJ, USA,IEEE LNKD- DOI: 10.1109/IROS.2005.1545032, 2 August 2005 (2005-08-02), pages 653-658, XP010857128 ISBN: 978-0-7803-8912-0**

## Description

### Background of the invention:

This invention is situated in the field of sound source localization, i.e. estimating the position of a sound source relative to a sensor. The position of the sound source may be represented in spherical coordinates as azimuth, elevation and distance.

The invention especially relates to the estimation of the distance from the sensor to a sound source, which has mostly been ignored in audio applications, where horizontal (azimuth) localization is in focus. The invention proposes a method for improving the distance estimation that relies on a combination of several audio features of a sound. The integration of these features can be done within the previously proposed concept of audio proto objects as described in the application EP 09153712.

While the general concept of the invention may be implemented using single microphone, certain further developments of the invention may require two separate microphones, e.g. mounted on a stationary platform or a mobile platform such as e.g. a land, air or sea vehicle or a robot. The sensed sound signal from the microphone will be supplied to a computing unit performing the method for estimating the distance from the microphone(s) to the sound source. The computing unit preferably is an on-board computing unit also in case of a mobile platform.

The sound source distance estimation can be used to determine the behavioral relevance of sound, e.g. in communication situations (ignoring speech from a distant source) or for a mobile application, which can respond with higher priority to closer sounds (e.g. an approaching vehicle).

### Prior art:

Most state-of-the art sound localization systems provide only the capacity for an estimation of the azimuth angle of a sound source's position. A few recent extensions have shown that an extension to azimuth and elevation angle is possible (e.g. [Rodemann2009, Usman2008]).

Estimation of distance was demonstrated with systems having 3 or more microphones [Weng2001] or by using a mobile platform and also assuming a source that is active repeatedly (this approach is based on triangulation) [Berglund2005]. Our approach works using only one or two microphones without requiring any motion of apparatus or sound source.

The basic method of sound distance estimation using the signal energy is already outlined in section 2.3 of [Blauert2001]. The signal envelope falls off with 1/distance and the signal energy with distance^(-2). The main problem is that the signal energy at a reference distance (called production energy in this patent) is not generally known and that there are a number of other factors besides the distance that can influence the actual measured signal energy. Our method can be used to correct some of these other influences.

### Academic prior art:

1.) Real time humanoid sound source localization and tracking in a highly reverberant environment, Usman, M.; Keyrouz, F.; Diepold, K.; ICSP 2008. 9th International Conference on Signal Processing, Pages:2661 - 2664

2.) Berglund, E. & Sitte, J. , Sound source localization through active audition, Proc. Int. Conf. Intelligent Robots and Systems (IROS), 2005, Pages: 509-514

3.) Blauert, J., Spatial Hearing: The Psychophysics of Human Sound Localization, The MIT press, USA-Cambridge MA, 2001

4.) Weng, J. & Guentchev, K. Y., Three-dimensional sound localization from a compact noncoplanar array of microphones using tree-based learning, Journal of the Acoust. Soc. of America (JASA), 2001, 110, 310-323

5.) Tobias Rodemann, Frank Joublin and Christian Goerick, Audio Proto Objects for Improved Sound Localization, Proc. Int. Conf. Intelligent Robots and Systems (IROS), 2009

6.) M. Cowling and R. Sitte, Comparison of techniques for environmental sound recognition, Pattern Recognition Letters, vol. 24, no. 15, pp. 2895 - 2907, 2003.

### Patent literature:

US 6243322, proposes to use the variability of the azimuth position estimation as a distance estimation cue. However, the position estimation depends on many more factors than just distance.

Document US 2004/141418 (A1) describes a speaker distance detection apparatus and method using a microphone array, capable of exactly detecting the distance between a speaker and even a small terminal such as a mobile telephone, and a speech input/output apparatus using the method. The speaker distance detection apparatus uses a microphone array composed of a plurality of microphones, previously determines a reference microphone to be a reference among a plurality of microphones, detects differences between a signal level of the reference microphone and signal levels of the other microphones, based on correlations between signals in the respective microphones, and determines the distance from the microphone array to the speaker based on the detected signal level difference.

Document US 2008/170717 (A1) describes an energy based technique to estimate the positions of people speaking from an ad hoc network of microphones. In addition, a technique to normalize the gains of the microphones based on people's speech is described, which allows aggregation of various audio channels from the ad hoc microphone network into a single stream for audio conferencing. The technique is invariant of the speaker's volumes.

**Object of the invention:**

The object of the invention is the estimation of the distance from a sensor to a sound source using sensed sound recordings from one or several, preferably two microphones. Most state-of-the art sound localization systems only provide information about the horizontal (azimuth) coordinate.

This object is achieved by means of the features of the independent claims. The dependent claims develop further the central idea of the invention.

The invention proposes a method for estimating the distance from a sound source to one or two sound sensors, the method comprising the following steps:

- using the sound sensor(s), recording a sound signal from a sound source,
- computing audio features of the recorded sound signal, the audio features including at least the mean signal energy,
- estimating the signal energy produced by the sound source based on signal characteristics other than the means signal energy,
- correcting the computed signal energy using the estimated signal energy, and
- mapping the corrected signal energy to an estimated distance of the sound source to the sound sensor.

The audio features may comprise one or more of:

- interaural difference cues such as IID and ITD values,
- mean signal energy,
- spectral characteristics such as e.g. the energy in different frequency bands,
- a source position estimation in azimuth plus optionally elevation), using e.g. IID and ITD values.

The mapping may be learned in a calibration step, using sound signals from a sound source with known position relative to the sound sensor(s) and known signal production energy.

The step of correcting the computed signal energy furthermore may comprise the steps of:

- using audio features, estimating the azimuthal position of the sound source, and
- correcting the computed signal energy depending on the estimated azimuthal position of the sound source.

The correction of the computed signal energy depending on the estimated azimuthal position of the sound source may learned in a calibration step, using sound signals from a sound source with known position relative to the sound sensor(s) and known signal production energy.

The invention also relates to a computing unit connected to a sound sensor, the computing unit being designed or programmed for executing a method as explained above.

The invention also relates to a stationary or mobile platform, carrying a sound sensor and such computing unit.

The computing unit, depending on the estimated distance of a sound source or the temporal development of said distance, may control the issuance of a visual or acoustical warning signal or control the issuance of a control signal to an actuator of a mobile platform.

The platform can be a land, air or sea vehicle or a robot.

The platform can be a robot having a speech recognition unit, wherein the speech recognition unit is controlled depending on the estimated distance of a sound source.

Further features, objects and advantages of the invention will become evident to the skilled person when going through the following detailed description of embodiments, when taken in conjunction with the figures of the enclosed drawings.

Figure 1 shows the dependency of the signal energy over the distance between a sensor and a sound source,
Figure 2 shows a block chart of a system according to the invention, and
Figure 3 shows a simplified flow chart of a method of the invention.

A few technical solutions for estimating the distance using a larger array of many microphones have been proposed, but they come with a substantial hardware effort and it is questionable that these approaches work if distances become larger.

In contrast to previous approaches using microphone arrays the invention requires only one or two microphones thereby reducing the technical constraints. The apparatus can also deal with sounds over a larger range of distances.

Estimating the distance of a sound source is a difficult problem since only ambiguous cues are available. An example is the signal's energy. A very loud signal can either be very close or it was generated by a very strong source (high production energy).

To deal with this problem the invention proposes to use additional cues to first categorize and localize the sound and then make a prediction of the production energy and a position-related correction of the measured signal energy.

Another difficulty in distance estimation is that potential localization cues like signal energy show a very high variability from one sample to the next. It is therefore proposed to average over many samples belonging to the same sound.

This invention may be combined with the concept of audio proto objects as described in the application EP 09153712. Audio proto objects are a compressed representation of audio features for a segmented window of sound, thereby providing the needed temporal averaging process.

In some constrained scenarios a simple temporal averaging in a fixed window might replace the audio proto object system for the purposes of this invention.

To adequately deal with to the complex interaction between sound waves, the environment and the apparatus, the invention introduces a calibration process (prior to the distance estimation of an unknown sound source) that allows the system to learn the relation between the signal energy and the distance of the sound source. For the calibration process, sound sources with known characteristics (production energy, 3D position, and category) are presented to the system and audio features are computed. From this data, the system according to the invention will learn the mapping between audio features and the desired characteristics (correction factors, category, or distance).

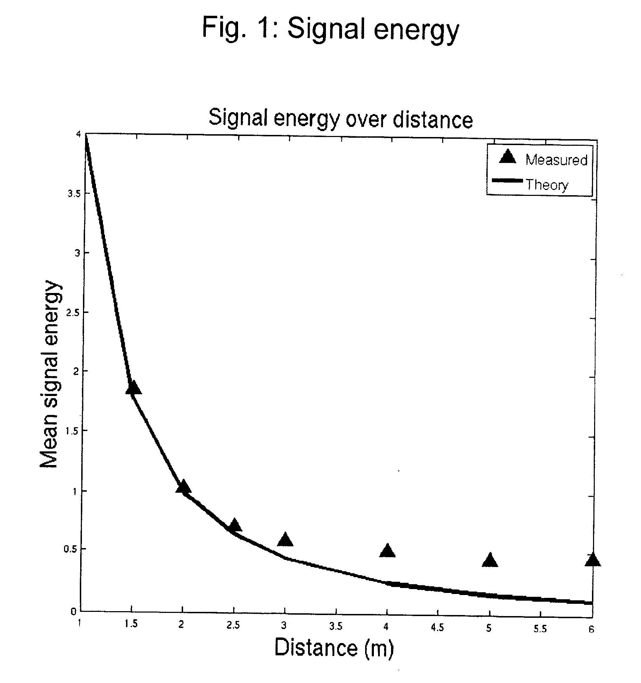

This mapping can, for example, be represented as a Look-Up-Table (LUT). This is shown in Fig. 1, which can be interpreted as LUT for distance given the measured mean signal energy.

Fig.1 shows the mean signal energy as a function of distance. The solid line shows the theoretical values (1/distance^2), triangles denote actual measurements in an indoor scenario. Measured values were integrated over 25 different sounds. The difference between theory and measurements very likely results from room specific echo effects.

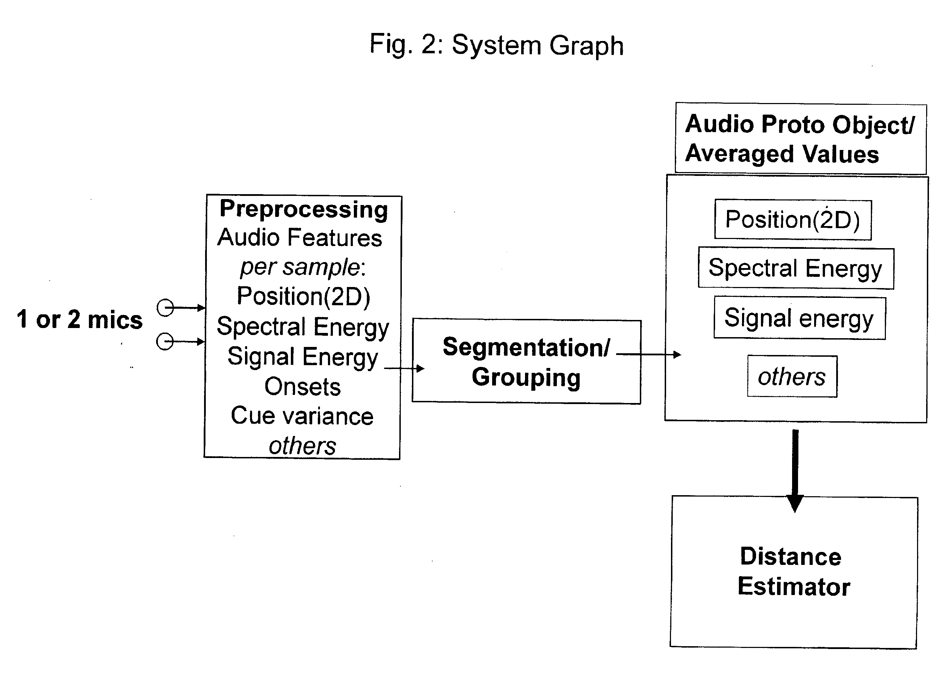

Fig. 2: This figure depicts the part of the invention that generates the necessary features for the distance estimation module outlined later. Based on the recorded signal from one or two microphones, a number of audio features are computed, like a 2D (azimuth and elevation) position estimation based on binaural cues (this requires 2 microphones), the current signal energy in different frequency channels (spectral characteristics), and the mean signal energy (the sum of spectral energies over all channels). Further audio features can be added if necessary.

All described audio features are computed on a sample-by-sample basis. A second processing module then performs a temporal segmentation process, that groups all samples with homogeneous characteristics or that exceed a certain energy threshold.

A third module then computes a compressed representation (e.g. averages) of the audio features derived in the first preprocessing module.

An example instantiation of the first three modules is described in EP 09153712.

The representation of sounds as compressed and averaged collections of audio features is called an audio proto object.

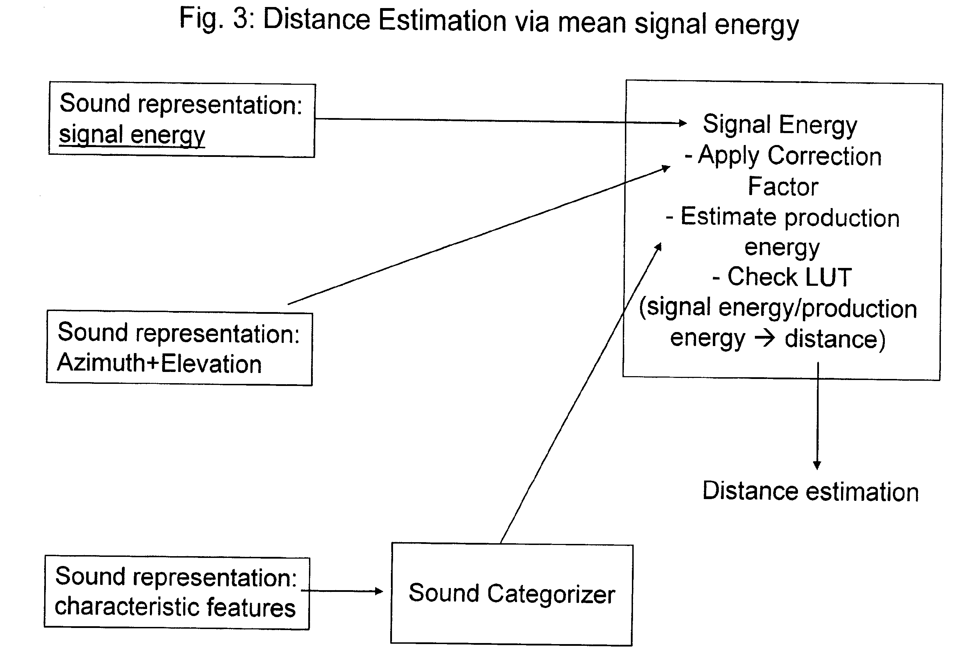

These audio proto objects are then forwarded to the distance estimation module that is described in Fig. 3.

Fig. 3:
This figure sketches the distance estimation based on the mean signal energy. All required audio features are taken from the sound representation that is detailed in Fig. 2. The distance estimation module first takes the measured mean signal energy. Then it applies a correction factor that depends on the measured 1D or 2D position of the sound source.

Then the production energy is estimated by using a subset of audio features (for example spectral characteristics) to estimate the sound category. Based on the sound category estimation a category correction factor can be derived. Then the (position corrected) measured signal energy will be further modified by the category correction factor. In a final step the system will use the result of the previous step and compute the distance (for example via a simple Look-Up-Table operation). The latter can, as all correction factors of the present invention, be generated in a calibration process.

The described system according to the invention produces an estimation of the most likely distance of the sound source being the source of sensed and recorded audio signals.

**Details of the invention:**

The sound source distance estimation system according to the present invention as shown in figure 2 comprises several modules:

- The first module performs an audio preprocessing to extract a variable number of audio cues like ITD (Interaural Time Difference), IID (Interaural Intensity Difference), signal energy, spectral energy, or other cues.

- The second module performs a temporal segmentation of sounds based on the signal energy or other cues.

- In the third module the audio cues are averaged over the segment and combined to form a compact representation of the current sound (called audio proto object). This representation is then fed into the fourth module, which is a distance estimation module.

If sounds occur in isolation and there is no background noise, the audio proto object approach can be replaced by another averaging process like temporal averaging over a temporal window. This means that the audio proto object concept is not essential for the invention but will increase performance. Also it combines several preprocessing modules into a single framework.

Based on the output of the previously described modules (see Fig. 2) the distance can be estimated by the following distance estimation module (Fig. 3):

The distance estimation module (Fig. 3) uses the signal's energy as a basic cue. According to [Blauert1995] the signal energy falls off with 1/distance^2 so that knowing the source's mean energy at production and measuring the energy at one microphone the distance can be calculated. However, in most scenarios the signal's production energy is not known. In addition the bearing of the apparatus relative to the sound source can influence the perceived amplitude. An example is the orientation of a robot's head carrying one or two microphones. Furthermore the 1/distance^2 relation is only approximately true, especially indoors (due to echo effects), see Fig. 1.

To deal with these problems the invention proposes three extensions:

Firstly, instead of calculating the signal energy to distance relation, the invention proposes a calibration step to adapt to the environmental conditions the system is in.

The calibration step comprises the training of a mapping (e.g. LUT) with a known stimulus (production energy and distance of a known sound source) to learn the true relation for a number of different positions (the curve defined by the triangles in Fig. 1).

The relation may be learned and represented via methods like neural networks or a look-up-table (LUT) containing averages of measurements.

Example for the simplest case of a LUT with averaging:

In a calibration step a number of $n = 1:N$ sound sources is presented to the microphones(s) at every distance d and compute the mean signal energy $e(n,d)$ of the sound. The LUT $L\_D$ is now calibrated as:

$$(1) \quad L\_D(d) = 1/N \; sum\_n \; e(n,d)$$

For a new sound at an unknown distance and a measured mean signal energy $e\_m$ the estimated distance $d\_e$ is computed by finding the entry in LUT with the lowest difference:

$$(2) \quad d\_e = arg \; min(\|L\_D(d)-e\_m\|)$$

Secondly, the invention proposes to use additional cues from the audio proto object to identify the type or category of sound and derive a prediction of the production energy. Note that the latter approach does not correspond to speech recognition but rather sound categorization. The basis of our approach is that most types of sound have a limited range of possible production energies, thereby allowing a better estimation of the sound's distance.

Sound categorization can for example be based on the spectral energy characteristics or other standard audio features and is a standard in audio processing (see for example reference 6: [Cowling]).

The relation between sound category and production energy is again derived via a calibration procedure (measuring and storing a combination of audio features and production energy values).

Example (again for LUT):

In the calibration session a number of sounds for each category (e.g. speech, types of music), are presented at a reference distance (e.g. 1 m). In a LUT $L\_C$ the mean signal energy at the reference distance is compute as the mean signal energy averaged over all sounds from the category. When the sound category c has been determined, the distance estimation as in eqn (2) is modified by replacing:

$$(3) \quad e\_m \rightarrow e\_m \ / \ (L\_C(c)/mean(L\_C)).$$

The term *(L_C(c)/mean(L_C))* is a correction factor to compensate for higher or lower production energies of category c relative to the mean over all categories.

Thirdly the measured signal energy values are corrected with a correction factor that depends on the measured 2D (azimuth and elevation) position of the source. The correction factor can also be derived via a calibration procedure by measuring the signal energy from different 2D positions. This approach is similar to the category correction factor just that instead of calibrating and applying the category related LUT *L_C* a position related LUT *L_P* is used. The latter is derived from a calibration where a number of sounds are played from different 2D (horizontal and vertical) positions *p* but the same distance and the mean signal energy is computed for every position as an average over all sounds played at that position.

The 2D position *p* can be estimated using standard sound localization methods, for example the one described in reference 5 [Rodemann2009].

Then a correction factor is applied:

$$(4) \quad e\_M \rightarrow e\_M \ / \ (L\_P(p)/mean(L\_P)).$$

The operations in equations (3) and (4) can be applied on their own or in combination. While the performance of eqn. (3) depends on the availability of a good sound categorizer, equation (4) requires a good 2D (or 1D) position estimator.

*Aspects of the invention (basis for formulation of claims) :*

The core of the invention is a system for estimating the distance between a sound source and at least one microphone. The system records audio signals from the microphones and computes a number of standard audio features like interaural difference cues (IID and ITD), mean signal energy, spectral characteristics (energy in different frequency bands), a source position estimation in azimuth (plus maybe elevation) (this estimation can be based on for example IID and ITD), plus any number of other audio features.

The distance is computed by measuring the mean signal energy, predicting a production energy based on additional measured features of the sound (like spectral characteristics) and correcting the measured signal energy by a factor based on the estimated production energy, correcting the measured energy by a factor that depends on the measured source position, and then performing a look-up in a pre-calibrated data to map the measured signal energy, corrected by the sound category and/or 2D position dependent factor(s), to a distance estimation.

*Application Areas*

This invention can be used for example in the car, aeronautics, water vehicle or the robotics domain to estimate the distance to sound sources even over larger distances.

Specific examples:

1.) A humanoid robot is equipped with two microphones for basic (horizontal) sound localization and speech processing. Using this invention the microphones can be used to estimate the distance of the sound source and decide if the sound is forwarded to speech recognition or not (in order to only listen to nearby persons).

2.) A car is equipped with one or more microphones. On hearing a sound, a recognition module categorizes the sound and the described apparatus estimates the source distance for consecutive time-steps. For the example case of an approaching ambulance, the car could generate a warning signal for the driver and mute the sound entertainment system.

**Glossary:**

1.) **Coordinates:** The position of a sound source is normally described in spherical coordinates: azimuth = horizontal position, elevation = vertical position and distance (range).

2.) **Binaural cues - IID and ITD:**

Sound source localization in two dimensions (azimuth + elevation) is commonly achieved through the analysis of so-called binaural cues. These represent differences in the recorded audio signal between two microphones positioned at different locations of the apparatus (e.g. a robot's head).

The two most important ones are the Interaural Intensity Difference (IID) and the Interaural Time Difference (ITD). IID describes the difference in signal intensity while ITD refers to a delay or phase shift between the signals recorded in the two microphones.

3.) **Signal energy + Spectral Energy:** We refer to the squared, low-pass filtered signal envelope (or amplitude) as the signal energy. It is the energy of the signal in all frequency bands. A description of the energy in different frequency bands is called spectral energy in this patent. The signal energy is often related to the volume or loudness of a sound, while the spectral energies, especially the relation of energies in different frequency bands, is often characteristic for the type of sound. In standard audio processing the signal energy and spectral energies are computed for every sample. Our approach uses an integrated (averaged) representation - as a mean signal energy or mean spectral energy for a complete sound.

## Claims

1. A method for estimating the distance from a sound source to one or two sound sensors, the method comprising the following steps:

- in a first calibration step, computing from a number of $n=1:N$ sound sources presented to the sensor(s) at every distance $d$ the mean signal energy $e(n,d)$ of the sound to produce a first mapping $L\_D$ with $L\_D(d) = 1/N$ $sum\_n\ e(n,d),$ where $N$ is the total number of presented sound sources and $sum\_n$ is the summation of all mean signal energy values for all $n$ sound sources at distance $d$,
- in a second calibration step, computing for a number of sounds presented at a reference distance for a specific category c the mean signal energy averaged over all sounds from the category to produce a second mapping $L\_C,$ and,
- after calibration,
- using the sound sensor(s), recording a sound signal from a sound source,
- computing audio features of the recorded sound signal, the audio features including at least a measured mean signal energy,
- determining the category , c, of the sound signal based on computed audio features of the recorded sound signal other than the measured mean signal energy $e\_m$,
- correcting, using a computing unit, the mean signal energy $e\_m$ using a correction factor determined by the second mapping $L\_C,$ the correction factor being $L\_C(c)/mean(L\_C),$ the corrected measured mean signal energy being computed by $e\_m\ /\ (L\_C(c)/mean(L\_C)),$ mean $(L\_C)$ being the mean signal energy averaged over all categories, $L\_C(c)$ being the mean signal energy corresponding to the determined category c of the recorded sound signal retrieved from the mapping L_C, and

- mapping the corrected measured mean signal energy to an estimated distance $d\_e$ of the sound source to the sound sensor by finding the entry in the first mapping $L\_D$ with the smallest difference, $d\_e = arg\ min(||\ L\_D(d)$ - corrected measured mean signal energy $||)$.

2. The method according to claim 1,
   wherein the audio features comprise one or more of:

   - interaural difference cues such as Interaural Intensity Difference and Interaural Time Difference values,
   - mean signal energy,
   - spectral characteristics such as e.g. the energy in different frequency bands,
   - a source position estimation in azimuth plus optionally elevation), using e.g. Interaural Intensity Difference and Interaural Time Difference values.

3. The method of any of the preceding claims,
   wherein the step of correcting the computed signal energy furthermore comprises the steps of:

   - using audio features, estimating the azimuthal position of the sound source, and
   - correcting the computed signal energy depending on the estimated azimuthal position of the sound source.

4. The method of claim 3,
   wherein the correction of the computed signal energy depending on the estimated azimuthal position of the sound source is learned in the calibration step, using sound signals from a sound source with known position relative to the sound sensor(s) and known signal production energy.

5. A computing unit connected to a sound sensor, the computing unit being programmed for executing a method according to any of the preceding claims.

6. A stationary or mobile platform, carrying a sound sensor and a computing unit according to claim 5.

7. The platform according to claim 6, wherein the computing unit, depending on the estimated distance of a sound source or the temporal development of said distance, controls the issuance of a visual or acoustical warning signal or control the issuance of a control signal to an actuator of a mobile platform.

8. The platform according to claim 6 or 7,
   which is a land, air or sea vehicle or a robot.

9. The platform according to claim 8,
   which is a robot having a speech recognition unit, wherein the speech recognition unit is controlled depending on the estimated distance of a sound source.

10. A computer software program product, executing a method according to any of claims 1 to 4 when run on a computing unit.

**Patentansprüche**

1. Verfahren zur Abschätzung der Distanz einer Schallquelle zu einem oder zwei Schallsensoren, wobei das Verfahren weist folgende Schritte auf:

   - in einem ersten Kalibrierungsschritt, Berechnung der Durchschnitts-Signalenergie e(n,d) des Schallgeräuschs aus einer Anzahl von $n=1:N$ Schallquellen, welche auf die Sensoren (s) bei jeder Distanz d ausgerichtet sind, zur Erstellung eines ersten Mapping L_D mit $L\_D(d) = 1/N\ sum\_n\ e(n,d),$
   wobei $N$ die komplette Anzahl von ausgerichteten Schallquellen, und $sum\_n$ die Summation aller Durschnitts-Signalenergiewerte für alle n Signalquellen bei Distanz d sind,
   - in einem zweiten Kalibrierungsschritt, Berechnung der über alle Schallgeräusche aus der Kategorie gemittelten Durchschnitts-Signalenergiewerte für eine Anzahl von Schallgeräuschen bei einer ausgerichteten Referenzdistanz für eine spezifische Kategorie c zur Erstellung eines zweiten Mappings L_C, und,
   - nach der Kalibrierung,

- Verwendung des (r) Schallsensors (en) zur Aufnahme eines Schallsignals von einer Schallquelle,
- Berechnung von Audiokenndaten des aufgenommenen Schallgeräuschs, wobei die Audiokenndaten zumindest eine gemessene Durchschnitts-Signalenergie beinhalten,
- Festlegung der Kategorie, c, des Schallsignals basierten auf den berechneten Audiokenndaten des aufgenommenen Schallsignals, die nicht die gemessenen Durchschnitts-Signalenergie $e_m$ sind,
- Korrektur, unter Verwendung einer Rechnereinheit, der Durchschnitts-Signalenergie $e_m$ mittels eines durch das zweite Mapping $L\_C$ festgelegten Korrekturfaktors, wobei der Korrekturfaktor $L\_C(c)/Durchschnitt(L\_C)$ ist, wobei die korrigierte Durchschnitts-Signalenergie aus $e_m / (L\_C(c)/Durchschnitt(L\_C)$ berechnet wird, wobei Durchschnitt ($L\_C$) die über alle Kategorien gemittelte Durchschnitts-Signalenergie ist, wobei $L\_C(c)$ die zu der festgelegten Kategorie c des aus dem Mapping $L\_C$ abgerufenen aufgenommenen Schallsignals gehörende Durchschnitts-Signalenergie ist,
und
- Mapping der korrigierten gemessenen Durchschnittsignalenergie zu einer abgeschätzten Distanz $d_e$ der Schallquelle zu dem Schallsensor durch Auffinden des Dateneintrags in dem ersten Mapping $L\_D$ mit der geringsten Differenz, $d_e = arg\ min\ (||L\_D(d) - korrigierter\ Durchschnittsignalenergie\ ||)$.

2. Verfahren entsprechend Anspruch 1,
wobei die Audiokenndaten eine oder mehr aufweisen von:

- interauralen Signaldifferenzen, so wie interaurale Intensitätsdifferenz- und interaurale Zeitdifferenzwerte,
- Durchschnittsignalenergie,
- spektrale Eigenschaften, so wie z.B. die Energie in unterschiedlichen Frequenzbändern,
- eine Quellenpositionsabschätzung in Azimut plus optionaler Höhenangabe, durch die Verwendung z.B. interauraler Intensitätsdifferenz und interauraler Zeitdifferenzwerte.

3. Verfahren nach einem der vorangegangenen Ansprüche, wobei der Schritt zur Korrektur der berechneten Signalenergie weiterhin eine Schritt aufweist:

- Verwendung der Audiokenndaten, Vorbestimmung der Azimutposition der Schallquelle, und
- Korrektur der berechneten Signalenergie in Abhängigkeit der abgeschätzten Azimutposition der Schallquelle.

4. Verfahren nach Anspruch 3,
wobei die Korrektur der berechneten Signalenergie, welche von der abgeschätzten Azimutposition der Schallquelle abhängig ist, im Kalibrierungsschritt gelernt wird, unter Verwendung von Schallsignalen von einer Schallquelle mit bekannter Position relativ zum Schallsensor/en und bekannter Schallerzeugungsenergie.

5. Mit einem Schallsensor verbundene Rechnereinheit, wobei die Rechnereinheit zur Durchführung eines Verfahrens nach einem der vorangegangenen Ansprüche programmiert ist.

6. Stationäre oder mobile Plattform, welche den Schallsensor und die Rechnereinheit nach Anspruch 5 trägt.

7. Plattform nach Anspruch 6, wobei die Rechnereinheit, in Abhängigkeit der abgeschätzten Distanz einer Schallquelle oder die temporäre Entwicklung dieser Distanz, die Emission eines visuellen oder akustischen Warnsignals steuert, oder die Emission eines Kontrollsignals zu einem Bedienungselement einer mobilen Plattform steuert.

8. Plattform entsprechend Anspruch 6 oder 7 welches ein Land-, Luft- oder Seefahrzeug oder ein Roboter ist.

9. Plattform entsprechend Anspruch 8 , welche ein Roboter mit einer Spracherkennungseinheit ist, wobei die Spracherkennungseinheit in Abhängigkeit von der ermittelten Distanz einer Schallquelle gesteuert wird.

10. Computersoftwareprogramm-Produkt, welche das Verfahren entsprechend einem der Ansprüche 1 bis 4 abarbeitet, wenn es auf einer Rechnereinheit läuft.


**Revendications**

1. Procédé pour estimer la distance d'une source sonore à un ou deux capteurs acoustiques, le procédé comprenant les étapes suivantes :

- dans une première étape d'étalonnage, le calcul, à partir d'un nombre de $n=i:N$ sources sonores présentées au capteur ou aux capteurs à chaque distance $d$, de l'énergie de signal moyenne $e(n,d)$ du son pour produire un premier mappage $L\_D$ avec $L\_D(d) = 1/N\ sum\_n\ e(n,d)$, où $N$ est le nombre total de sources sonores présentées et $sum\_n$ est la sommation de toutes les valeurs d'énergie de signal moyenne pour toutes les n sources sonores à la distance $d$,

- dans une seconde étape d'étalonnage, le calcul, pour un nombre de sons présentés à une distance de référence pour une catégorie spécifique $c$, de l'énergie de signal moyenne dont la moyenne est calculée sur tous les sons de la catégorie pour produire un second mappage $L\_C$, et,

après l'étalonnage,

- en utilisant le ou les capteur(s) acoustique(s), l'enregistrement d'un signal sonore d'une source sonore,

- le calcul de caractéristiques audio du signal sonore enregistré, les caractéristiques audio comprenant au moins une énergie de signal moyenne mesurée,

- la détermination de la catégorie, c, du signal sonore en fonction des caractéristiques audio calculées du signal sonore enregistré autres que l'énergie de signal moyenne mesurée $e\_m$,

- la correction, en utilisant une unité calculatrice, de l'énergie de signal moyenne $e\_m$ en utilisant un facteur de correction déterminé par le second mappage $L\_C$, le facteur de correction étant $L\_C(c)/mean(L\_C)$, l'énergie de signal moyenne mesurée corrigée étant calculée par $e\_m / (L\_C (c)/mean(L\_C))$, $mean(L\_C)$ étant l'énergie de signal moyenne dont la moyenne est calculée sur toutes les catégories, $L\_C(c)$ étant l'énergie de signal moyenne correspondant à la catégorie déterminée c du signal sonore enregistré récupéré à partir du mappage $L\_C$,

et

- le mappage de l'énergie de signal moyenne mesurée corrigée sur une distance estimée $d\_e$ de la source sonore au capteur acoustique en trouvant l'entrée dans le premier mappage $L\_D$ avec la différence la plus petite, $d\_e = arg\ min(\| L\_D(d)$ - énergie de signal moyenne mesurée corrigée $\|)$.

2. Procédé selon la revendication 1,
   dans lequel les caractéristiques audio comprennent un ou plusieurs parmi :

   - des repères de différence interaurale, tels que des valeurs de différence d'intensité interaurale et de différence de temps interaurale,
   - une énergie de signal moyenne,
   - des caractéristiques spectrales telles que, par exemple, l'énergie dans différentes bandes de fréquence,
   - une estimation de position de source en azimut plus facultativement élévation, en utilisant par exemple des valeurs de différence d'intensité interaurale et de différence de temps interaurale.

3. Procédé selon une quelconque des revendications précédentes,
   dans lequel l'étape de la correction de l'énergie de signal calculée comprend en outre les étapes de :

   - en utilisant des caractéristiques audio, l'estimation de la position azimutale de la source sonore, et
   - la correction de l'énergie de signal calculée en fonction de la position azimutale estimée de la source sonore.

4. Procédé selon la revendication 3,
   dans lequel la correction de l'énergie de signal calculée en fonction de la position azimutale estimée de la source sonore est apprise dans l'étape d'étalonnage, en utilisant des signaux sonores à partir d'une source sonore avec une position connue par rapport au ou aux capteur(s) acoustique(s) et une énergie de production de signal connue.

5. Unité calculatrice connectée à un capteur acoustique, l'unité calculatrice étant programmée pour exécuter un procédé selon une quelconque des revendications précédentes.

6. Plateforme stationnaire ou mobile, supportant un capteur acoustique et une unité c alculatrice selon la revendication 5.

7. Plateforme selon la revendication 6, dans laquelle l'unité calculatrice, en fonction de la distance estimée d'une source sonore ou du développement temporel de ladite distance, commande l'envoi d'un signal d'avertissement visuel ou acoustique ou commande l'envoi d'un signal de commande à un actionneur d'une plateforme mobile.

8. Plateforme selon la revendication 6 ou 7, qui est un véhicule terrestre, aérien ou maritime ou un robot.

**9.** Plateforme selon la revendication 8,
qui est un robot comportant une unité de reconnaissance vocale, dans laquelle l'unité de reconnaissance vocale est commandée en fonction de la distance estimée d'une source sonore.

**10.** Produit programme logiciel d'ordinateur, exécutant un procédé selon une quelconque des revendications 1 à 4 lorsqu'il est exécuté sur une unité calculatrice.

# Fig. 1: Signal energy

Signal energy over distance

EP 2 362 238 B1

Fig. 2: System Graph

# Fig. 3: Distance Estimation via mean signal energy

Sound representation: signal energy

Sound representation: Azimuth+Elevation

Sound representation: characteristic features → Sound Categorizer

Signal Energy
- Apply Correction Factor
- Estimate production energy
- Check LUT
(signal energy/production energy → distance)

→ Distance estimation

EP 2 362 238 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 09153712 A
- US 6243322 B
- US 2004141418 A1
- US 2008170717 A1

**Non-patent literature cited in the description**

- **USMAN, M. ; KEYROUZ, F. ; DIEPOLD, K.;.** Real time humanoid sound source localization and tracking in a highly reverberant environment. *ICSP 2008. 9th International Conference on Signal Processing,* 2008, 2661-2664
- **BERGLUND, E. ; SITTE, J.** Sound source localization through active audition. *Proc. Int. Conf. Intelligent Robots and Systems,* 2005, 509-514
- **BLAUERT, J.** Spatial Hearing: The Psychophysics of Human Sound Localization. The MIT press, 2001
- **WENG, J. ; GUENTCHEV, K. Y.** Three-dimensional sound localization from a compact noncoplanar array of microphones using tree-based learning. *Journal of the Acoust. Soc. of America,* 2001, vol. 110, 310-323
- **TOBIAS RODEMANN ; FRANK JOUBLIN ; CHRISTIAN GOERICK.** Audio Proto Objects for Improved Sound Localization. *Proc. Int. Conf. Intelligent Robots and Systems,* 2009
- **M. COWLING ; R. SITTE.** Comparison of techniques for environmental sound recognition. *Pattern Recognition Letters,* 2003, vol. 24 (15), 2895-2907